# EUROPEAN PATENT APPLICATION

(11) **EP 4 404 607 A1**
(43) Date of publication of application: **24.07.2024**
(21) Application number: 21957537.0
(22) Date of filing: 16.09.2021
(51) Int. Cl.: H04W 16/14, H04W 24/10, H04W 92/18

(54) **TERMINAL**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); KUMAGAI, Shinya, Tokyo 100-6150 (JP); NAGATA, Satoshi, Tokyo 100-6150 (JP)
(74) Representative: Hoffmann Eitle
(86) International application number: PCT/JP2021/034184
(87) International publication number: WO 2023/042356

(57) **Abstract**

A terminal includes: a transmission unit configured to transmit a transmission request of channel state information to another terminal in an unlicensed band; and a reception unit configured to receive the channel state information from the other terminal in the unlicensed band, wherein, after transmitting the transmission request, before the last timing in which channel state information for the transmission request can be received, the transmission unit transmits a transmission request of channel state information to the other terminal again.

## Description

### TECHNICAL FIELD

The present invention relates to a terminal in a wire less communication system.

### Background Art

In LTE (Long Term Evolution) and LTE successor systems (e.g., LTE-A (LTE Advanced), NR (New Radio) (which is also referred to as 5G)), a D2D (Device to Device) technology in which terminals communicate directly with each other without an intervening base station is under consideration (e.g., Non-Patent Document 1).

D2D reduces traffic between a terminal and a base station and enables communication between terminals even when the base station is unable to communicate in the event of a disaster, etc. Since 3GPP (3rd Generation Partnership Project) refers to D2D as "sidelink," "sidelink" is also used in addition to D2D in this specification.

D2D communication is broadly classified into D2D discovery for discovering other terminals capable of performing communication and D2D communication (also referred to as D2D direct communication, D2D communication, terminal-to-terminal direct communication, etc.) for communicating directly between terminals. Hereinafter, when D2D communication, D2D discovery, etc. are not specifically distinguished, it is simply called D2D or sidelink.

In addition, in NR Release 17, it has been considered to use a frequency band higher than those of conventional releases (for example, Non-Patent Document 2). For example, in frequency bands from 52.6GHz to 71GHz, applicable numerologies including subcarrier spacing, channel bandwidth and the like, design of the physical layer, failures assumed in actual wireless communications, and the like are being studied.

### Prior Art Document

### Non-Patent Documents

Non-Patent Document 1: 3GPP TS 38.211 V16. 6.0 (2021-06)
Non-Patent Document 2: 3GPP TS 38.306 V16. 5.0 (2021-06)

### SUMMARY OF THE INVENTION

### Problems to be Solved by the Invention

In a frequency band that is newly operated and uses a frequency higher than that of the related art, an unlicensed band is defined. In the unlicensed band, various regulations are defined, and for example, LBT (Listen Before Talk) is executed when performing channel access.

In sidelink of NR Releases 16 and 17, a CSI report function of sidelink for transmitting channel state information (CSI) from a terminal to another terminal is defined, and it is assumed that each terminal has the CSI report function even in an unlicensed band. Since it is necessary to consider LBT failure and the like in the unlicensed band, it is not desirable to use the conventional sidelink CSI report function as it is. Therefore, a new sidelink CSI report function assuming the unlicensed band is required.

The present invention has been made in view of the above, and it is therefore an object of the present invention to provide a technique for realizing CSI reporting of sidelink suitable for operation in an unlicensed band.

### Means for Solving the Problems

According to the disclosed technique, there is provided a terminal including:
a transmission unit configured to transmit a transmission request of channel state information to another terminal in an unlicensed band; and
a reception unit configured to receive the channel state information from the other terminal in the unlicensed band,
wherein, after transmitting the transmission request, before the last timing in which channel state information for the transmission request can be received, the transmission unit transmits a transmission request of channel state information to the other terminal again.

### Effects of the Invention

According to the disclosed technique, there is provided a technique for realizing CSI reporting of sidelink suitable for operation in an unlicensed band.

### Brief Description of the Drawings

[Fig. 1] FIG. 1 is a diagram for explaining V2X;
[Fig. 2] FIG. 2 is a diagram showing an example of a frequency range in an embodiment of the present invention;
[Fig. 3] FIG. 3 is a diagram showing an example of resource allocation mode 1;
[Fig. 4] FIG. 4 is a diagram for explaining an example of a DCI format;
[Fig. 5] FIG. 5 is a diagram showing example (1) of resource allocation mode 2;
[Fig. 6] FIG. 6 is a diagram showing example (2) of resource allocation mode 2;
[Fig. 7] FIG. 7 is a diagram for explaining CSI transmission and reception in sidelink.
[Fig. 8] FIG. 8 is a diagram for explaining CSI transmission and reception in sidelink.
[Fig. 9] FIG. 9 is a diagram for explaining Example 1;
[Fig. 10] FIG. 10 is a diagram for explaining Example 2;
[Fig. 11] FIG. 11 is a diagram for explaining Example 2;
[Fig. 12] FIG. 12 is a diagram for explaining Example 2;
[Fig. 13] FIG. 13 is a diagram for explaining Example 2;
[Fig. 14] FIG. 14 is a diagram showing an example of a functional configuration of a base station 10 according to an embodiment of the present invention.
[Fig. 15] FIG. 15 is a diagram showing an example of a functional configuration of a terminal 20 according to an embodiment of the present invention;
[Fig. 16] FIG. 16 is a diagram showing an example of a hardware configuration of the base station 10 or the terminal 20 according to an embodiment of the present invention.
[Fig. 17] FIG. 17 is a diagram showing an example of a configuration of a vehicle 2001 according to an embodiment of the present invention.

### Detailed Description of the Invention

Hereinafter, an embodiment of the present invention will be described with reference to the drawings. The embodiment described below is an example, and the embodiment to which the present invention is applied is not limited to the following embodiment.

In the operation of the wireless communication system according to the embodiment of the present invention, existing techniques are used as appropriate. The existing technology is, for example, existing LTE or existing NR, but is not limited to existing LTE or existing NR. In addition, the term "LTE" used in the present specification has a broad meaning including LTE-Advanced, a scheme subsequent to LTE-Advanced, or a wireless local area network (LAN), unless otherwise specified.

In the embodiment of the present invention, the duplex scheme may be a time division duplex (TDD) scheme, a frequency division duplex (FDD) scheme, or another scheme (for example, flexible duplex).

In the embodiment of the present invention, "configuring" a radio parameter or the like may mean that a predetermined value is pre-configured or that a radio parameter notified from the base station 10 or the terminal 20 is configured.

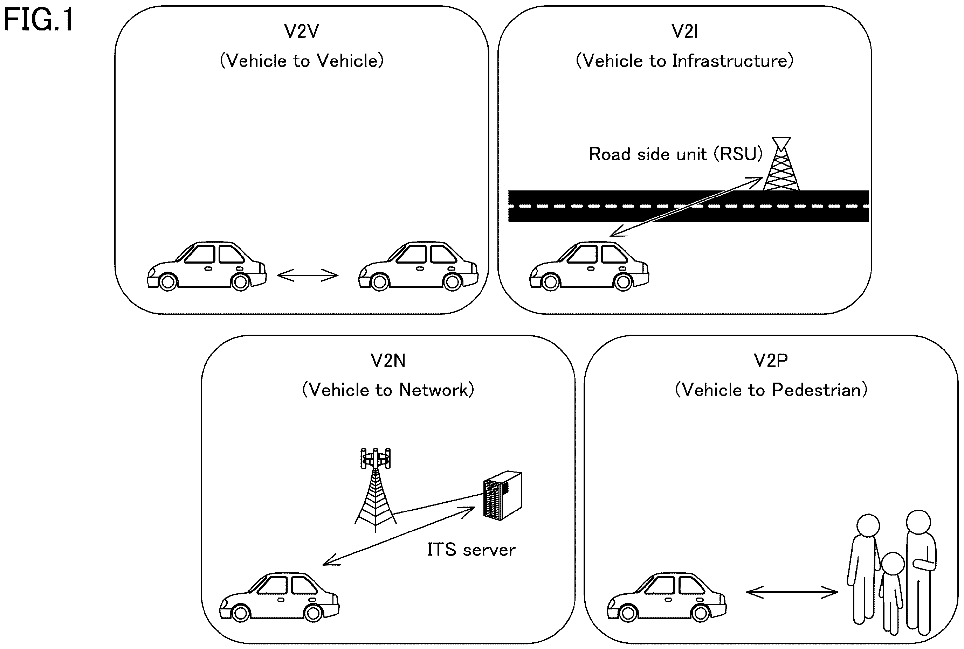

FIG. 1 is a diagram for explaining V2X which is one of embodiments of sidelink. In 3GPP, it has been considered to realize vehicle to everything (V2X) or enhanced V2X (eV2X) by extending a D2D function, and specifications are being developed. As shown in FIG. 1, V2X is a part of ITS (Intelligent Transport Systems), and is a generic name of V2V (Vehicle to Vehicle) meaning a communication form performed between vehicles, V2I (Vehicle to Infrastructure) meaning a communication form performed between vehicles and roadside units (RSUs) installed on the sides of roads, V2N (Vehicle to Network) meaning a communication form performed between vehicles and ITS servers, and V2P (Vehicle to Pedestrian) meaning a communication form performed between vehicles and mobile terminals carried by pedestrians.

In 3GPP, V2X using cellular communication and terminal-to-terminal communication of LTE or NR is being studied. V2X using cellular communication is also referred to as cellular V2X. In the V2X of NR, studies are being conducted to realize high-capacity, low-delay, high-reliability, and QoS (Quality of Service) control.

It is assumed that, as for V2X of LTE or NR, study not limited to the 3GPP specification will be progressed in the future. For example, it is assumed that ensuring of interoperability, cost reduction by upper layer implementation, combining or switching methods for a plurality of RATs (Radio Access Technology), regulatory compliance in each country, data acquisition, distribution, database management and use method of LTE or NR V2X platforms will be considered.

In the embodiments of the present invention, it is primarily assumed that a communication apparatus (UE) is mounted on a vehicle, but the embodiments of the present invention are not limited to such embodiments. For example, the communication apparatus may be a terminal held by a person, or the communication apparatus may be a drone or airplane mounted device, or the communication apparatus may be a base station, an RSU, a relay station (relay node), a terminal having scheduling capability, or the like.

Note that SL (Sidelink) may be distinguished on the basis of either UL (Uplink) or DL (Downlink) and one of 1) to 4) or a combination of 1) to 4). The SL may also be another name.
1) Resource allocation in the time domain
2) Resource allocation in the frequency domain
3) Synchronization signal (including SLSS (Sidelink Synchronization Signal)) to be referenced
4) Reference signal used for pathloss measurement for transmission power control

Also, for SL or UL OFDM (Orthogonal Frequency Division Multiplexing), either CP-OFDM (Cyclic-Prefix OFDM), DFT-S-OFDM (Discrete Fourier Transform-Spread-OFDM), OFDM without Transform precoding or OFDM with Transform precoding may be applied.

In SL of LTE, Mode 3 and Mode 4 are specified for allocating SL resources to the terminal 20. In Mode 3, transmission resources are dynamically allocated by a DCI (Downlink Control Information) transmitted from the base station 10 to the terminal 20. In Mode 3, SPS (Semi Persistent Scheduling) is also possible. In Mode 4, the terminal 20 autonomously selects a transmission resource from a resource pool.

The term "slot" in the embodiments of the present invention may be replaced by "symbol", "minislot", "subframe", "radio frame", or "TTI" (Transmission Time Interval). The term "cell" in embodiments of the present invention may also be read as "cell group", "carrier component", "BWP", "resource pool", "resource", "RAT" (Radio Access Technology), "system" (including wireless LANs), and the like.

According to the embodiments of the present invention, the terminal 20 is not limited to the V2X terminal, but may be any type of a terminal that performs D2D communication. For example, the terminal 20 may be a terminal owned by a user, such as a smartphone, or an IoT (Internet of Things) device, such as a smart meter.

3GPP Release 16 or Release 17 sidelink is specified for 1) and 2) as shown below.

1) Environment in which only 3GPP terminals exist in an ITS (Intelligent Transport Systems) band
2) Environment in which UL resources are available for SL in licensed bands of FR1 (Frequency range 1) and FR2 defined in NR

As sidelink of 3GPP Release 18 and later, a study is in progress to newly target an unlicensed band. For example, the unlicensed band is an unlicensed band such as a 5GHz-7GHz band, a 60GHz band, or the like. Hereinafter, the sidelink in the unlicensed band may be referred to as

### SL-U.

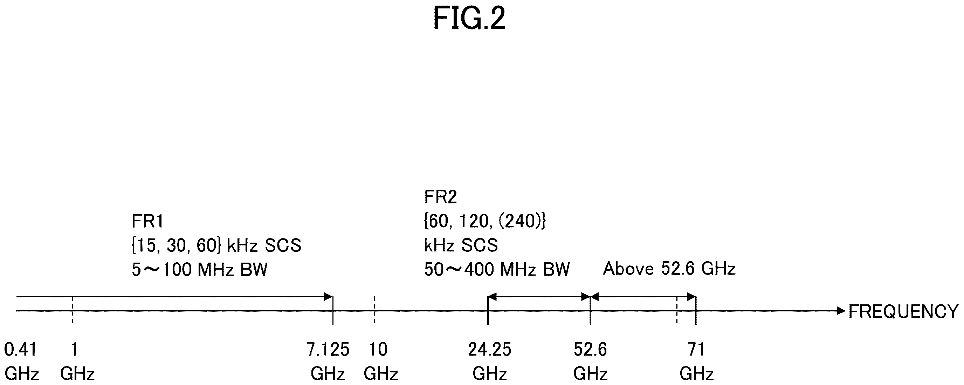

FIG. 2 is a diagram showing an example of a frequency range in an embodiment of the present invention. In the NR specifications of 3GPP Release 17, for example, operating 52.6GHz or higher is under study. As shown in FIG. 2, FR1 in which operation is defined currently is a frequency band from 410MHz to 7.125GHz, the SCS (Subcarrier spacing) is 15, 30 or 60kHz, and the bandwidth is from 5MHz to 100MHz. FR2 is a frequency band from 24.25GHz to 52.6GHz, SCS is 60, 120 or 240kHz, and the bandwidth is from 50MHz to 400MHz. For example, the newly operated frequency band may be assumed to be from 52.6GHz to 71GHz.

For example, as an example of the unlicensed band in the 5GHz to 7GHz band, 5.15GHz to 5.35GHz, 5.47GHz to 5.725GHz, 5.925GHz or more, and the like are assumed.

For example, as an example of the unlicensed band in the 60GHz band, 59GHz to 66GHz, 57GHz to 64GHz or 66GHz, 59.4GHz to 62.9GHz, and the like are assumed.

In the unlicensed band, various regulations are defined so as not to affect other systems or other devices.

For example, in the 5GHz to 7GHz band, LBT (Listen before Talk) is executed at the time of channel access. The base station 10 or the terminal 20 performs power detection for a predetermined period immediately before transmission, and stops transmission when the power exceeds a certain value, that is, when transmission from another device is detected.

In addition, a maximum channel occupancy time (MCOT) is defined. The MCOT is a maximum time interval in which transmission is allowed to continue when transmission is started after LBT, and is, for example, 4ms in Japan.

In addition, as an occupied channel bandwidth (OCB) requirement, when a certain carrier bandwidth is used for transmission, X% or more of the band needs to be used. For example, in Europe, it is required to use 80% to 100% of a nominal channel bandwidth (NCB). The OCB requirement aims at ensuring that the power detection of the channel access is performed correctly.

In addition, with respect to the maximum transmission power and the maximum power spectral density, it is specified that transmission is performed at a predetermined transmission power or less in order to avoid excessive interference. For example, in Europe, 23dBm is the maximum transmission power in the 5150MHz to 5350MHz band. Further, for example, in Europe, 10dBm/MHz is the maximum power spectral density in the 5150MHz to 5350MHz band.

For example, in the 60GHz band, LBT is executed when performing channel access. The base station 10 or the terminal 20 performs power detection for a predetermined period immediately before transmission, and stops transmission when the power exceeds a certain value, that is, when transmission from another device is detected. Further, regarding the maximum transmission power and the maximum power spectral density, it is defined that transmission is performed at a predetermined transmission power or less. It is also specified to have the ability to meet the OCB requirement.

### (Operation example related to sidelink)

Since the present embodiment is intended for sidelink, a basic operation example related to data transmission and reception of sidelink will be described as a basic operation example related to sidelink.

In sidelink in 3GPP Release 16 and Release 17, two types of resource allocation modes shown below are defined. The terminal 20 and the base station 10 according to the present embodiment can perform the operation according to this definition.

### 1) Resource allocation mode 1

The network (base station 10) performs scheduling of sidelink. The terminal 20 performs sidelink transmission based on a sidelink grant received from the network.

### 2) Resource allocation mode 2

The terminal 20 autonomously selects a sidelink resource and performs transmission. The terminal monitors transmission of other terminals 20 in advance, and selects an available resource. Monitoring transmission of the other terminals 20 may be referred to as sensing. Each terminal 20 specifies a future resource in transmission, which is referred to when selecting the resource. Designating a future resource may be referred to as reservation.

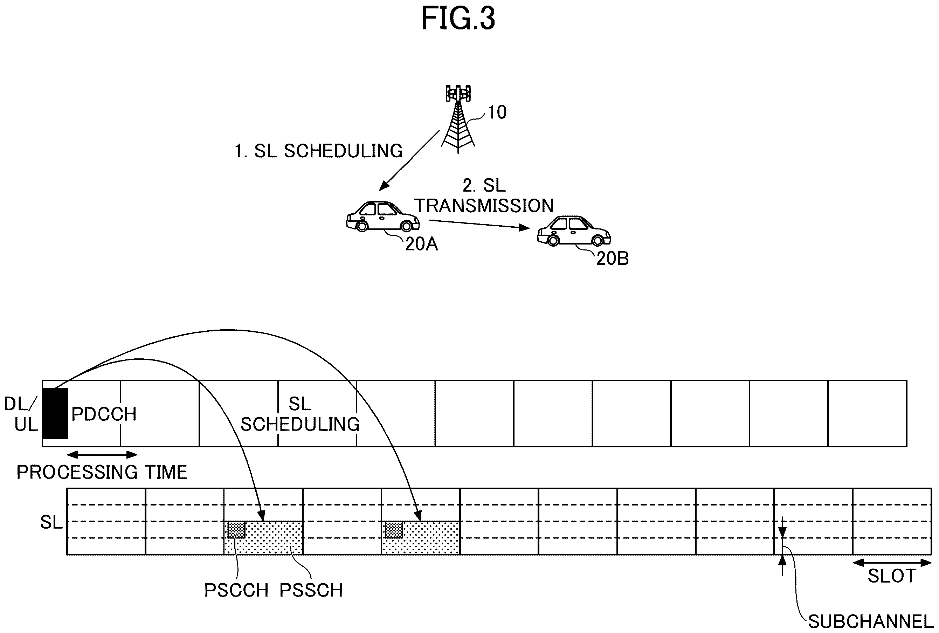

FIG. 3 is a diagram illustrating an example of the resource allocation mode 1. As illustrated in FIG. 3, in the resource allocation mode 1, the base station 10 allocates a transmission resource of SL to the terminal 20A. That is, as illustrated in FIG. 3, a transmission resource (PSCCH/PSCCH) of SL is allocated to the terminal 20A by a PDCCH (to be more specific, a DCI) received from the base station 10, and the terminal 20A performs SL transmission to the terminal 20B by using the transmission resource.

More specifically, allocation of SL transmission from the base station 10 to the terminal 20A includes dynamic grant (DG), configured grant (CG) type 1, and CG type 2. In resource allocation mode 1, DCI format 3_0 is used for DG and CG type 2. Note that a monitoring opportunity of the DCI format 3_0 is configured separately from other formats.

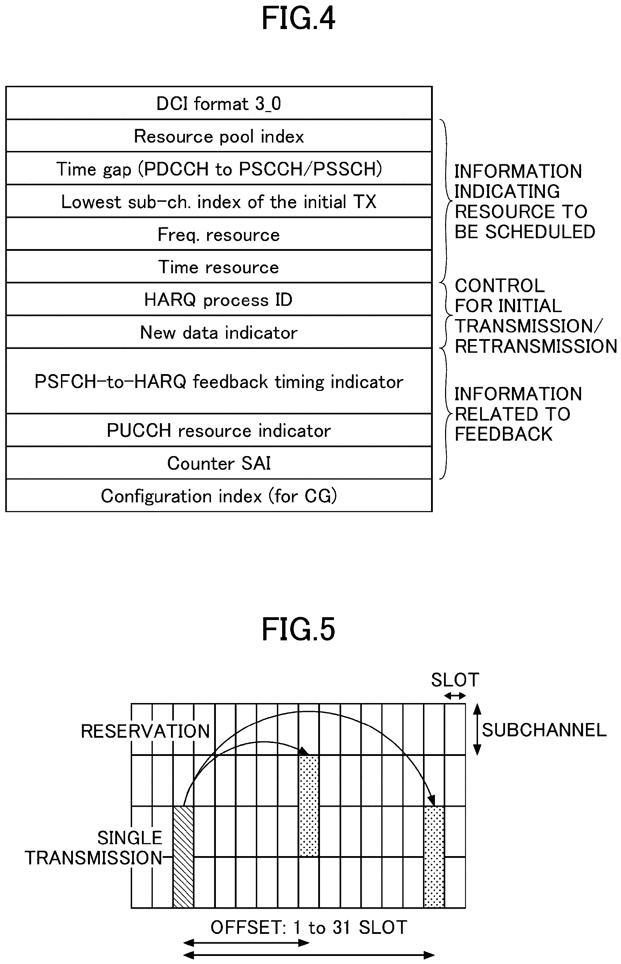

FIG. 4 is a diagram for explaining an example of the DCI format. As illustrated in FIG. 4, information notified by the DCI format 3_0 includes information of a resource to be scheduled, information related to initial transmission/retransmission, and information related to HARQ (Hybrid automatic repeat request) feedback. Regarding the information on initial transmission/retransmission, the terminal 20A on the transmitting side manages the association between an HPN (HARQ Process Number) specified in the DCI format 3_0 and an HPN in an SCI.

In the resource allocation mode 2, the terminal 20 autonomously selects a resource for periodic or aperiodic traffic by performing the following two steps. At this time, periodic or aperiodic resource reservation of another terminal 20 is considered.

Step 1) Identify candidate resources in a resource selection window
Step 2) Select a resource to use for transmission or retransmission from the identified candidates.

The above step 1 is performed based on two types of resource reservations. The first is a reservation for transmission or retransmission of aperiodic traffic by a time resource assignment field. The second is a reservation for periodic traffic transmission or retransmission by a resource reservation period field.

FIG. 5 is a diagram illustrating an example (1) of the resource allocation mode 2. As shown in FIG. 5, multiple resource reservations may be made in a single transmission. For example, the offset from the transmission making the reservation to the reserved resource may be from 1 slot to 31 slots.

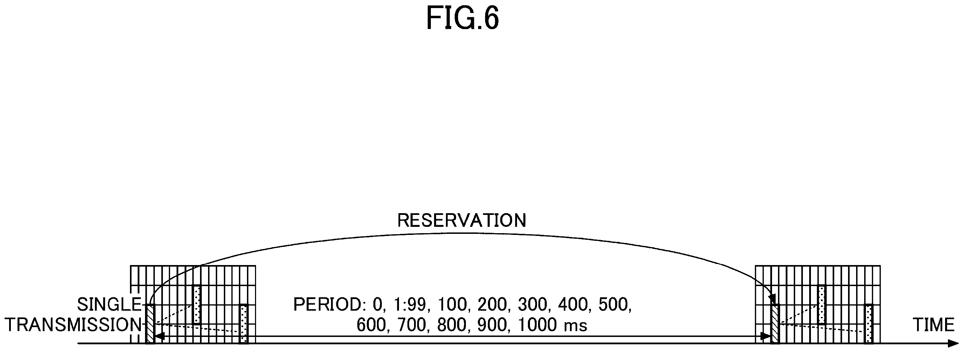

FIG. 6 is a diagram illustrating an example (2) of the resource allocation mode 2. As shown in FIG. 6, resources may be reserved periodically in a single transmission. The period may be, for example, 0ms, 1ms to 99ms, 100ms, 200ms, 300ms, 400ms, 500ms, 600ms,700ms, 800ms, 900ms, or 1000ms.

Regarding the operation related to sidelink data transmission described above, in the unlicensed band, the terminal 20 can detect signal transmission of other systems in the unlicensed band by performing LBT at the time of PSCCH/PSSCH transmission.

When the terminal 20 detects power exceeding a predetermined power value in LBT (defined as "LBT failure"), the terminal 20 may not be allowed to transmit PSCCH/PSSCH in the corresponding slot.

### (Sidelink CSI report function)

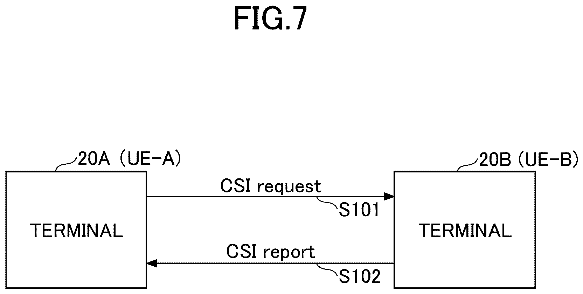

A basic operation example related to the CSI report according to the present embodiment will be described with reference to FIG. 7.

In S101, the terminal 20A transmits a CSI request to the terminal 20B. In S102, the terminal 20B transmits a CSI report to the terminal 20A in response to the received CSI request. That is, a CSI is transmitted. In the following description, a terminal that requests CSI is referred to as UE-A, and a terminal that is requested to transmit CSI (= a terminal that reports CSI) is referred to as UE-B. In addition, "CSI" in the following description is CSI in sidelink, and may be denoted as SL-CSI.

In 3GPP Release 16/17, a sidelink CSI report function is defined. The terminal 20 of the present embodiment can perform an operation according to the definition. The outline of the CSI report function of sidelink in 3GPP Release 16/17 is as follows.

Cast type is only unicast. The content of CSI is only CQI and RI, and Reporting type is Aperiodic report. Regarding the configuration, for example, parameters such as sl-CSI-RS-Config, sl-LatencyBoundCSI-Report and the like are configured between terminals by PC5-RRC signaling.

Regarding the trigger of the CSI report, when 1 is notified in the CSI request field in the SCI format 2-A notified from the UE-A to the UE-B, the UE-B understands that the CSI report is requested, and performs the CSI report. The UE-A transmits a CSI-RS in a PSSCH according to the SCI format 2-A, and the UE-B calculates a CSI based on the CSI-RS. The UE-B transmits the CSI by a MAC CE.

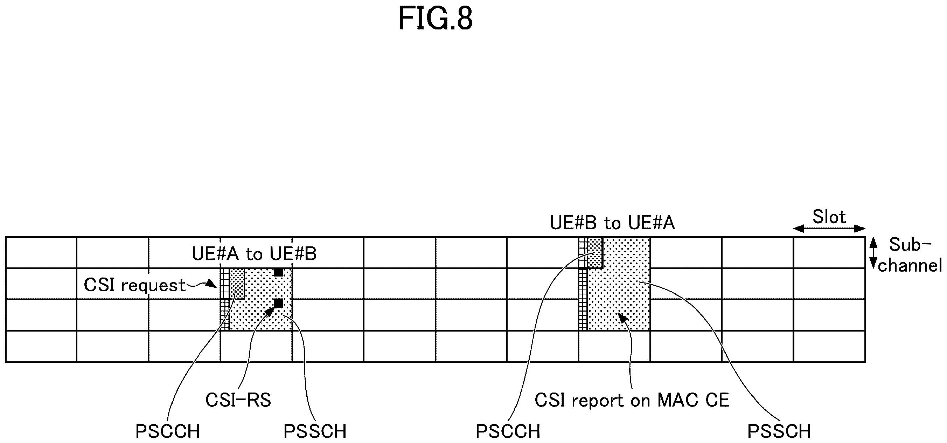

The above description is shown in FIG. 8. As illustrated in FIG. 8, a PSCCH (SCI) including a CSI request, a PSSCH, and a CSI-RS is transmitted from the UE-A to the UE-B by resources illustrated in the figure. After a certain time, the UE-B transmits a CSI to the UE-A by a MAC CE.

Triggering has the following limitations. When the UE-A makes a CSI request to the UE-B once, the UE-A is not allowed to make a request to the same UE-B again by the following timing.

- The last slot (= timing given by sl-LatencyBound-CSI-Report) in which the CSI report for the CSI request can be received
- Reception of the CSI report in response to the CSI request is completed.

The timing of the CSI report has the following limitations.

The UE-B starts sl-CSI-ReportTimer when receiving the CSI report trigger, and performs the CSI report while the timer is running. When the timer expires, the CSI report is cancelled. The value of sl-CSI-ReportTimer is given as sl-LatencyBound-CSI-Report.

### (Problem, Outline of Embodiment)

In the present embodiment, it is assumed that each terminal 20 uses SL-U that is sidelink in an unlicensed band. In the SL-U, the terminal 20 basically performs LBT and then performs transmission. Therefore, even if the CSI report is attempted to be executed by the existing technology, the CSI report may not be appropriately executed due to LBT failure or the like. Also, as a result of transmitting signals without being able to recognize signals of other terminals by LBT, signal collision may occur (hidden node problem).

Therefore, in the present embodiment, an operation related to the CSI report in the SL-U in consideration of the above problem will be described.

The terminal 20 basically performs the same operation as the operation in Release 16/17 described above, but in order to appropriately operate in the SL-U, a basic function extended with respect to the CSI report function of Rel-16/17 in the SL-U will be described below as Example 0. An example of triggering of the CSI report in the SL-U will be described as Example 1. An example of a CSI report operation in the SL-U will be described as Example 2. The Examples 0 to 2 can be can be carried out in any combination.

The terminal 20 performs the following operation when an unlicensed band is used for sidelink transmission and reception. However, the present invention is not limited thereto, and the following operation may be performed regardless of whether the band is an unlicensed band or a licensed band.

### (Example 0: Basic function enhancement for CSI report in SL-U)

Hereinafter, basic function enhancement related to CSI report in SL-U with respect to the CSI report function of Rel-16/17 will be described. Examples 0-1 to 0-3 will be described below.

### <Example 0-1>

The UE-B may transmit a SL-CSI by broadcast or groupcast.

Which type of broadcast and groupcast (and unicast) is used to transmit a SL-CSI may be configured by the UE-A to the UE-B by PC5 RRC signaling, may be defined in advance, may be configured in advance in each of the terminals, or may be designated by the UE-A to the UE-B together with a CSI request by an SCI, for example.

### <Example 0-2>

The UE-B may transmit, as content (information included in a SL-CSI) to be transmitted in the CSI report, information related to LBT, or information related to interference, or both of the information related to LBT and the information related to interference. In addition to these pieces of information, one or more of CQI, RI, and PMI may be included in the content.

The information related to LBT includes, for example, the number or the frequency (the number of times per unit time) of LBT failures.

The information related to interference is, for example, information related to power measured by a zero-power CSI-RS (ZP-CSI-RS), a TXRX switching gap, and the like. A ZP-CSI-RS for sidelink may be defined, and whether an RS to be transmitted is a CSI-RS (for example, a non-zero power CSI-RS) or a ZP-CSI-RS may be notified from the UE-A to the UE-B by an SCI. That is, whether the RS to be transmitted together with data (PSSCH) associated with the SCI is a CSI-RS or a ZP-CSI-RS may be notified by the SCI.

Also, CSI content to be transmitted from UE-B may be determined based on whether or not a ZP-CSI-RS is transmitted from the UE-A to the UE-B. For example, when the ZP-CSI-RS is transmitted, the UE-B may transmit interference information as CSI content, and when the ZP-CSI-RS is not transmitted and the CSI-RS is transmitted, the UE-B may transmit a CQI and an RI.

Further, as the interference information, either one or both of RSSI and a result of channel occupancy measurements may be reported as a CSI.

RSSI/channel occupancy may be measured in a higher layer or a lower layer. The timing for measuring the above value in the UE-B may be defined, may be configured in the UE-B from the UE-A by a PC5 RRC signaling or the like, or may be configured in the UE-B in advance.

With respect to the method of measuring the above value, it may be a linear average of sample values, or a rounded percentage of sample values which are beyond threshold within all the sample values.

With regard to a Container of the CSI content (interference information, LBT information and the like), the content may be transmitted using the reserved bits of the existing SL CSI reporting MAC CE. In addition, a new MAC CE different from the existing one may be used.

### <Example 0-3>

In the SL-U, in addition to the Aperiodic CSI report, a Periodic CSI report (P-CSI report) or a semi-persistent CSI report (SP-CSI report) may be performed.

Which of the P-CSI report and the SP-CSI report is to be performed in the UE-B may be configured by the UE-A to the UE-B by PC5 RRC signaling, or may be designated by the UE-A to the UE-B together with a CSI request by an

### SCI.

The information related to the configuration/designation may include a parameter related to period/CSI-RS/CSI content/delay requirement.

Further, the UE-A may activate/deactivate (that is, release) the SP-CSI report for the UE-B by an SCI or a MAC CE.

According to Example 0, each terminal 20 can frequently perform measurement of channel states in an environment in which a terminal outside the 3GPP is assumed to exist, and the measurement result can be shared between terminals.

### (Example 1: Trigger of CSI report in SL-U)

In Example 1, a trigger of a CSI report in the SL-U will be described.

After transmitting a CSI request to the UE-B, the UE-A may transmit a CSI request to the UE-B again before the last slot (= timing given by sl-LatencyBound-CSI-Report) in which a CSI report for the CSI request can be received.

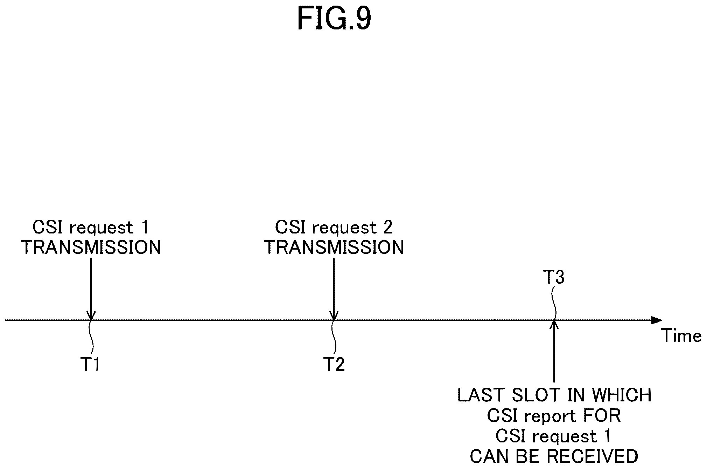

An operation example will be described with reference to FIG. 9. In FIG. 9, the UE-A transmits CSI request 1 to the UE-B at timing T1. It is assumed that timing T3 is the last timing given by the sl-LatencyBound-CSI-Report triggered by the CSI request 1. In the present Example, the UE-A can transmit CSI request 2 at a timing T2, for example, that is before T3.

Hereinafter, Example 1-1 to Example 1-3 will be described as specific operation examples.

### <Example 1-1>

The UE-A attempts to receive a HARQ-ACK for the CSI request (e.g., CSI request 1 of FIG. 9), but fails to detect the HARQ-ACK, and then transmits a CSI request (e.g., CSI request 2) to the UE-B again.

### <Example 1-2>

When the UE-A transmits the same TB (transport block) as that transmitted with a certain CSI request, the UE-A may transmit the CSI request to the UE-B again. In the example of FIG. 9, a certain TB (referred to as TB #1) is transmitted together with the CSI request 1 at the timing T1. At the timing T2, when retransmitting the same TB #1, a CSI request (CSI request 2) is transmitted again.

### <Example 1-3>

Next, an example of an operation of the UE-B when the UE-B receives a plurality of CSI requests from the UE-A will be described. Hereinafter, operation examples 1 to 3 will be described. Note that which operation of the operation examples 1 to 3 is to be executed may be defined, may be configured from the UE-A to the UE-B, or may be configured in advance in the UE-B.

### <Operation example 1 of Example 1-3>

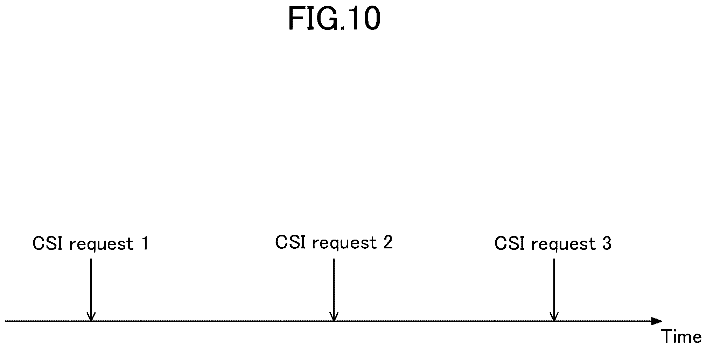

The UE-B performs CSI report for each of a plurality of CSI requests. For example, as shown in FIG. 10, when the UE-B receives CSI requests 1 to 30, the UE-B transmits a CSI report for the CSI request 1, transmits a CSI report for the CSI request 2, and transmits a CSI report for the CSI request 3.

### <Operation example 2 of Example 1-3>

The UE-B drops a CSI report process for any one of the plurality of CSI requests (does not perform the CSI report), and transmits CSI reports for the remaining CSI requests.

For example, the UE-B drops a CSI report process for back-side CSI request(s) among the plurality of CSI requests. Further, for example, the UE-B drops a CSI report process for back-side CSI request(s) among the plurality of CSI requests.

The front-side CSI request(s) among the plurality of CSI requests is (are), for example, the first CSI request, the first to N-th CSI requests, or the like. The back-side CSI request(s) among the plurality of CSI requests is (are), for example, the last CSI request, CSI requests from the last to (toward the front side) the N-th CSI request, or the like.

For example, in FIG. 10, the UE-B receives CSI requet 1, transmits a CSI report using it as a trigger, and does not perform CSI report for CSI-requests 2 and 3 to be received after that.

As another example, in FIG. 10, the UE-B receives CSI requests 1 to 3, transmits a CSI report using the last received CSI request 3 as a trigger, and does not perform CSI report for CSI requests 1 and 2 received before the last received CSI request 3.

### <Operation example 3 of Example 1-3>

The UE-B that has received a plurality of CSI requests from the UE-A assumes that each CSI request included in the plurality of CSI requests is the same CSI request, and performs one CSI reporting process together.

As an example, as illustrated in FIG. 10, when the UE-B receives three CSI requests 1 to 3 from the UE-A, the UE-B assumes that these are the same CSI requests, and performs one CSI report to the UE-A.

As to which CSI-RS corresponding to which CSI request among the plurality of CSI requests is used for measurement and calculation of CSI, for example, CSI-RS(s) corresponding to front-side CSI-request(s) among the plurality of CSI requests may be used for measurement and calculation of CSI, or CSI-RS(s) corresponding to back-side CSI-request(s) among the plurality of CSI requests may be used for measurement and calculation of CSI.

The front-side CSI request(s) among the plurality of CSI requests is (are), for example, the first CSI request, any CSI request among the first to N-th CSI requests, or the like. The back-side CSI request(s) among the plurality of CSI requests is (are), for example, the last CSI request, any CSI request among CSI requests from the last to (toward the front side) the N-th CSI request, or the like.

In the example of FIG. 10, for example, the UE-B measures and calculates CSI using the CSI-RS received together with the CSI request 1. Further, for example, the UE-B measures and calculates CSI by using the CSI-RS received together with the CSI request 3.

Further, the UE-B may perform CSI measurement and calculation using CSI-RS of each of the plurality of received CSI requests. In this case, for example, the average value of a plurality of CSIs measured/calculated by CSI-RS of each of the plurality of received CSI requests (the average between a plurality of CSI requests) may be used as the CSI to use in the CSI report.

The UE-B initializes/starts a timer using a CSI request among the plurality of received CSI requests as a trigger, and performs CSI report before the timer expires.

As to which CSI request is used as a trigger to initialize/activate the timer, front-side CSI request(s) among the plurality of CSI requests may be used, or back-side CSI request(s) among the plurality of CSI requests may be used.

The front-side CSI request(s) among the plurality of CSI requests is (are), for example, the first CSI request, any CSI request among the first to N-th CSI requests, or the like. The back-side CSI request(s) among the plurality of CSI requests is (are), for example, the last CSI request, any CSI request among CSI requests from the last to (toward the front side) the N-th CSI request, or the like.

In the example of FIG. 10, for example, the UE-B initializes/starts the timer using the CSI request 1 as a trigger. Also, for example, the UE-B initializes/activates the timer using the CSI request 3 as a trigger.

Regarding measurement and calculation of CSI, the UE-B may perform CSI measurement and calculation using CSI-RS(s) available before the timer expires after the timer is activated.

According to Example 1, there is an effect that rerequest can be immediately performed when a CSI request fails due to occurrence of transmission collision caused by a hidden terminal in an unlicensed band.

### (Example 2)

Next, a second embodiment will be described. In the second embodiment, a CSI report operation in SL-U will be described. Since the second embodiment includes a second embodiment 2-1 and a second embodiment 2-2, each of the embodiments will be described below.

### <Example 2-1>

In Example 2-1, when the UE-B performs resource selection for CSI report, the UE-B preferentially selects a resource on the temporally earlier resource among candidate resources. Specific operation examples will be described in the following examples 2-2-1 and 2-2-2.

### Example 2-1-1:

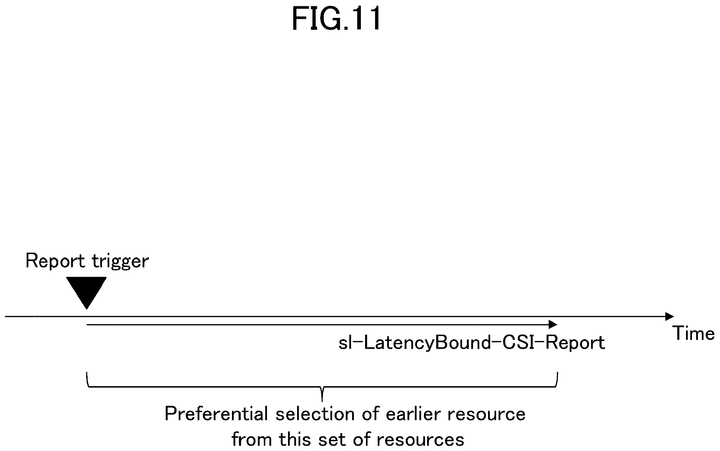

As shown in FIG. 11, the UE-B preferentially selects a temporally front side resource among candidate resources determined based on a delay requirement given by sl-LatencyBound-CSI-Report. For example, when there is a resource at time t-3 and a resource at time t within a time range specified by the sl-LatencyBound-CSI-Report from the trigger timing as available resources, the UE-B performs CSI report using the resource at time t-3.

### Example 2-1-2:

In this example, the UE-A transmits, to the UE-B, as configuration information, by the PC5 RRC signaling, sl-LatencyBound-CSI-Report, and sl-LatencyBound-CSI-Report-Early (<sl-LatencyBound-CSI-Report).

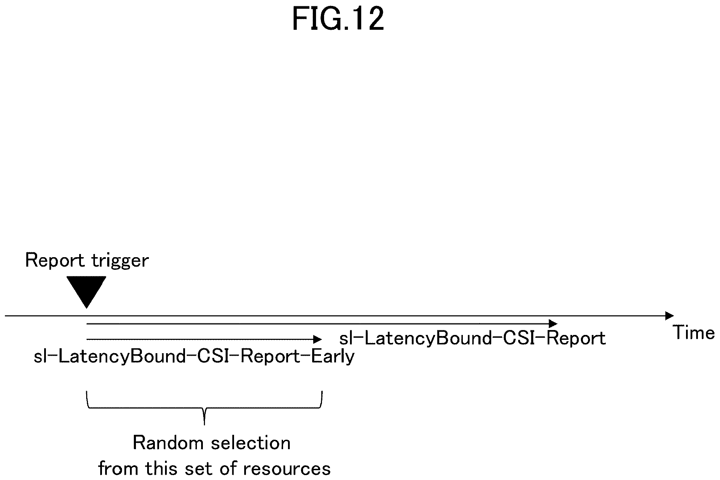

Then, as shown in FIG. 12, the UE-B randomly selects a resource from candidate resources determined based on the timing given by sl-LatencyBound-CSI-Report-Early(<sl-LatencyBound-CSI-Report).

When the UE-B cannot select a resource within the time determined by the sl-LatencyBound-CSI-Report-Early, the UE-B randomly selects a resource from candidate resources determined based on the delay requirement given by the sl-LatencyBound-CSI-Report.

Note that, in Example 2-1 (and other Examples), selection (determination) of a resource for CSI report in SL may be performed by the above-described resource allocation mode 1 or may be performed by the resource allocation mode 2. In the case of the resource allocation mode 1, when there is no resource that satisfies the delay requirement, the UE-B may transmit a scheduling request to the base station 10 in order to receive resource allocation for CSI report.

According to Example 2-1, even in an environment in which LBT failure may occur, the probability that SL-CSI can be transmitted so as to satisfy the delay requirement can be increased.

### <Example 2-2>

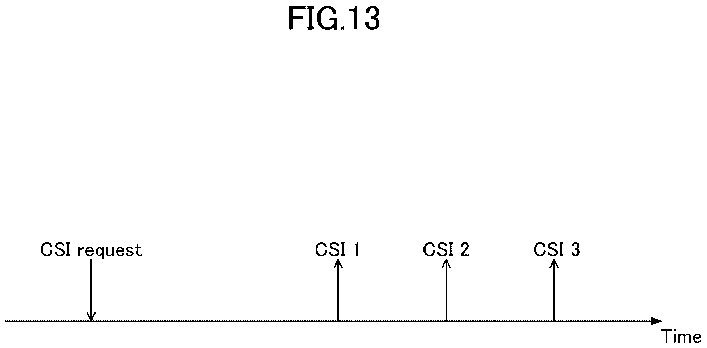

In Example 2-2, the UE-B may transmit a SL-CSI multiple times. An example is shown in FIG. 13. In FIG. 13, after receiving a CSI request, the UE-B transmits a SL-CSI corresponding to the CSI request through a plurality of PSSCHs. In FIG. 13, CSI is transmitted three times, which are denoted as CSI 1, CSI 2, and CSI 3, respectively.

A parameter indicating the number of times of transmission of CSI may be defined, may be configured from the UE-A to the UE-B, or may be configured in each terminal 20 in advance. Also, the number of times of CSI transmission may be determined by the UE-B itself.

The parameter of the number of times of transmission defined/configured/preconfigured may be a value designating the actual number of times of transmission, the minimum number of times of transmission, or the maximum number of times of transmission. For example, the UE-B to which the minimum number of transmissions is designated performs CSI transmission the number of times equal to or greater than the minimum number of transmissions. Further, the UE-B to which the maximum number of transmissions is designated performs CSI transmission the number of times equal to or less than the maximum number of transmissions.

When the UE-B transmits a SL-CSI a plurality of times in response to a certain CSI request, the UE-B may transmit each SL-CSI together with the same TB, or may transmit each SL-CSI together with different TB.

In a case where the SL-CSI is transmitted twice together with different TB, for example, the UE-B transmits "TB #1 + SL-CSI" at the first transmission and transmits "TB #2 + SL-CSI" at the second transmission.

According to Example 2-2, even when transmission collision occurs due to a hidden terminal in an unlicensed band, it is possible to increase the probability that the UE-A can receive a SL-CSI.

### (Other examples)

Next, other examples applicable to any of Examples 0 to 2 will be described.

The UE-A receives capability information (UE-Capability) from the UE-B. The UE-A may perform CSI request specific to a CSI report function in an unlicensed band only when the capability information received from the UE-B indicates support of the CSI report function in the unlicensed band.

The CSI request specific to the CSI report function in the unlicensed band is, for example, a request including an instruction to perform CSI report by broadcast or groupcast.

The configuration information (sl-LatencyBound-CSI-Report-Early, sl-LatencyBound-CSI-Report etc.) described in the Examples 0 to 2 may be related to the configuration between terminals by the PC5 RRC signaling, or may be configured from the base station 10 to the terminal 20.

Further, the UE-A may report the SL-CSI received from the UE-B to the base station 10 through a PUCCH or a PUSCH. The base station 10 may perform scheduling in the resource allocation mode 1 for the UE-B based on the received SL-CSI. For example, when the base station 10 grasps that interference of a certain resource is large by the SL-CSI, the base station 10 allocates a resource other than the resource of the large interference to the UE-B.

### (Apparatus Configuration)

Next, functional configuration examples of the base station 10 and the terminal 20 that execute the processes and operations described above will be described. The base station 10 and the terminal 20 include functions for implementing all the above-described Examples. However, each of the base station 10 and the terminal 20 may include only a part of the functions of all the Examples.

### <Base Station 10>

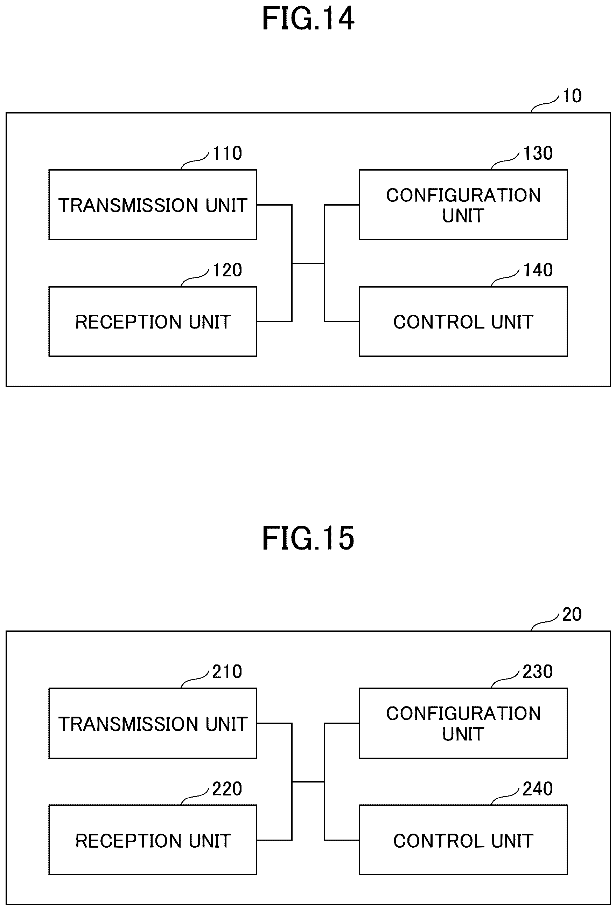

FIG. 14 is a diagram illustrating an example of a functional configuration of the base station 10. As illustrated in FIG. 14, the base station 10 includes a transmission unit 110, a reception unit 120, a configuration unit 130, and a control unit 140. The functional configuration shown in FIG. 14 is merely an example. The functional sections and the names of the functional units may be any as long as the operations according to the embodiment of the present invention can be executed.

The transmission unit 110 includes a function of generating a signal to be transmitted to the terminal 20 side and wirelessly transmitting the signal. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DL reference signal, and the like to the terminal 20.

The configuration unit 130 stores configuration information configured in advance and various kinds of configuration information to be transmitted to the terminal 20 in a storage unit, and reads the configuration information from the storage unit as necessary. The content of the configuration information is, for example, information related to configuration of the D2D communication.

The control unit 140 performs a process related to configuration for the terminal 20 to perform sidelink communication as described in the Examples. Further, the control unit 140 transmits scheduling of the sidelink communication and the DL communication to the terminal 20 via the transmission unit 110. The control unit 140 receives the CSI of the sidelink communication and the DL communication from the terminal 20 via the reception unit 120. The functional unit related to signal transmission in the control unit 140 may be included in the transmission unit 110, and the functional unit related to signal reception in the control unit 140 may be included in the reception unit 120.

### <Terminal 20>

FIG. 15 is a diagram illustrating an example of a functional configuration of the terminal 20. As illustrated in FIG. 15, the terminal 20 includes a transmission unit 210, a reception unit 220, a configuration unit 230, and a control unit 240. The functional configuration illustrated in FIG. 15 is merely an example. The functional sections and the names of the functional units may be any as long as the operations according to the embodiment of the present invention can be executed.

The transmission unit 210 creates a transmission signal from the transmission data and wirelessly transmits the transmission signal. The reception unit 220 wirelessly receives various signals and acquires a signal of a higher layer from the received signal of the physical layer. Also, the reception unit 220 has a function of receiving NR-PSS, NR-SSS, NR-PBCH, DL/UL/SL control signal or reference signal and so on transmitted from the base station 10. For example, the transmission unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), and the like, and the reception unit 220 receives PSCCH, PSSCH, PSDCH, PSBCH, or the like from another terminal 20.

The configuration unit 230 stores various types of configuration information received from the base station 10 or a terminal 20 by the reception unit 220 in a storage unit, and reads the configuration information from the storage unit as necessary. The configuration unit 230 also stores configuration information configured in advance. The content of the configuration information is, for example, information related to configuration of the sidelink communication.

The control unit 240 controls CSI transmission and reception with another terminal 20 as described in the Examples. The control unit 240 may perform scheduling of sidelink communication to another terminal 20. The control unit 240 may autonomously select a resource to be used for sidelink communication from the resource selection window based on the sensing result, or may perform re-evaluation or pre-emption. The functional unit related to signal transmission in the control unit 240 may be included in the transmission unit 210, and the functional unit related to signal reception in the control unit 240 may be included in the reception unit 220.

### (Hardware Configuration)

The block diagrams (FIG. 14 and FIG. 15) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

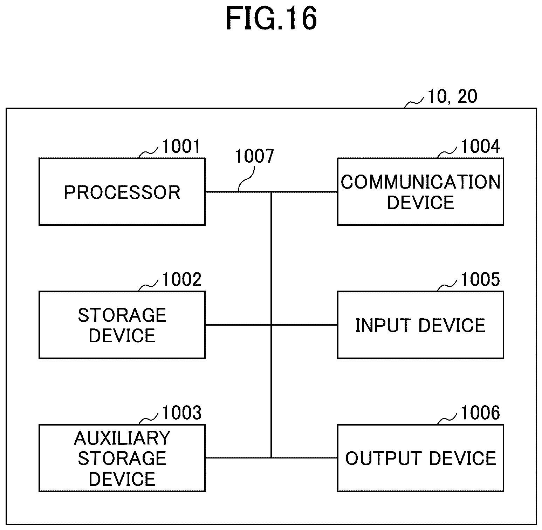

For example, the base station 10, the terminal 20, and the like in one embodiment of this disclosure may function as a computer for performing the processing of a radio communication method of this disclosure. FIG. 16 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in FIG. 14 may be attained by a control program that is stored in the storage device 1002 and is operated by the processor 1001. In addition, for example, the control unit 240 of the terminal 20 illustrated in FIG. 15 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

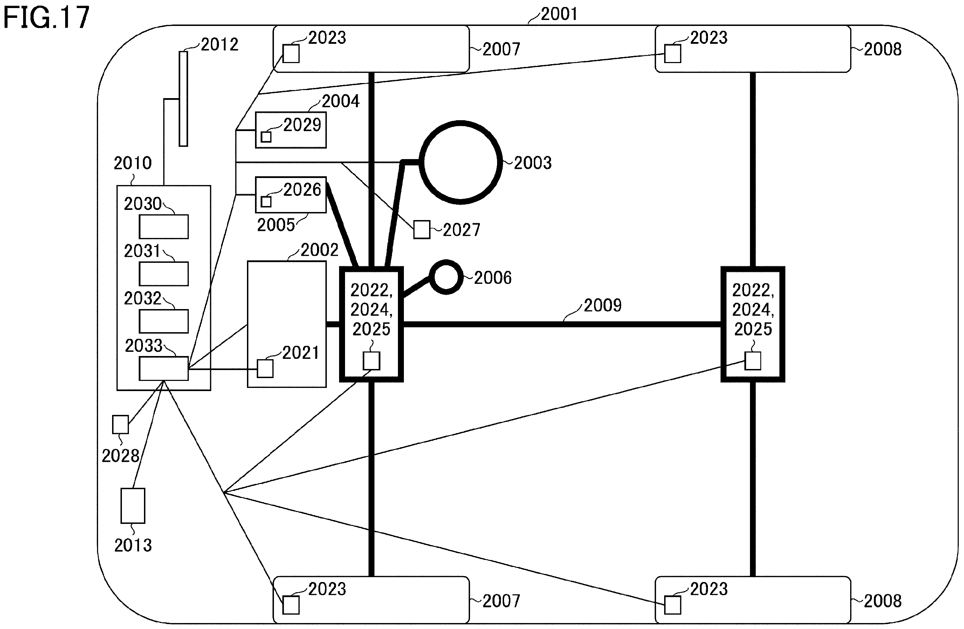

FIG. 17 shows a configuration example of a vehicle 2001. As shown in FIG. 17, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the terminal 20 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2011 includes a microprocessor 2031, a memory (ROM, RAM) 2032, and a communication port (IO port) 2033. The electronic control unit 2010 receives signals from the various sensors 2021-2029 provided in the vehicle. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 26, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 11, and sensors 2021-2029 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 31 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Summary of Embodiments)

The terminal in the present embodiment may be configured as a terminal described in each of the following items.
(Item 1) A terminal including:
   a transmission unit configured to transmit a transmission request of channel state information to another terminal in an unlicensed band; and
   a reception unit configured to receive the channel state information from the other terminal in the unlicensed band,
   wherein, after transmitting the transmission request, before the last timing in which channel state information for the transmission request can be received, the transmission unit transmits a transmission request of channel state information to the other terminal again.
(Item 2) A terminal including:
   a reception unit configured to receive a plurality of transmission requests of channel state information from another terminal in an unlicensed band; and
   a transmission unit configured to, in the unlicensed band, transmit channel state information for each of the plurality of transmission requests in sidelink, or transmit one channel state information for the plurality of transmission requests in sidelink.
(Item 3) A terminal including:
   a reception unit configured to receive a transmission request of channel state information from another terminal in an unlicensed band;
   a control unit configured to preferentially select a temporally front-side resource among a plurality of candidate resources existing in a time range in an unlicensed band; and
   a transmission unit configured to transmit channel state information for the transmission request in sidelink using the selected resource.
(Item 4) The terminal as described in item 3, wherein the time range is a first time range given by first configuration information, and the control unit selects the resource within a second time range, given by second configuration information, that is in a temporally front-side of the first time range.
(Item 5) The terminal as described in item 3 or 4, wherein the terminal transmits channel state information of the transmission request a plurality of times.
(Item 6) The terminal as described in any one of items 1 to 5, wherein the channel state information includes information related to LBT, or information related to interference.

According to any of items 1 to 6, a technique for realizing CSI reporting of sidelink suitable for operation in an unlicensed band is provided. According to item 4, even in an environment in which LBT failure may occur, the probability that SL-CSI can be transmitted so as to satisfy the delay requirement can be increased. According to item 5, even when transmission collision occurs due to a hidden terminal, it is possible to increase the probability of receiving SL-CSI. According to item 6, the terminal that receives channel state information can know an LBT state or an interference state of the transmission source.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G), xth generation mobile communication system (xG) (x is an integer or decima, for example), future radio access (FRA), new radio (NR), new radio access (NX), future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheel
2008 rear wheel
2009 axle
2010 electronic control unit
2012 information service unit
2013 communication module
2021 current sensor
2022 rotational speed sensor
2023 air pressure sensor
2024 vehicle speed sensor
2025 accelerometer
2026 brake pedal sensor
2027 shift lever sensor
2028 object detection sensor
2029 axle pedal sensor
2030 driving support system unit
2031 microprocessor
2032 memory (ROM, RAM)
2033 communication port (IO port)

## Claims

1. A terminal comprising:
a transmission unit configured to transmit a transmission request of channel state information to another terminal in an unlicensed band; and
a reception unit configured to receive the channel state information from the other terminal in the unlicensed band,
wherein, after transmitting the transmission request, before the last timing in which channel state information for the transmission request can be received, the transmission unit transmits a transmission request of channel state information to the other terminal again.

2. A terminal comprising:
a reception unit configured to receive a plurality of transmission requests of channel state information from another terminal in an unlicensed band; and
a transmission unit configured to, in the unlicensed band, transmit channel state information for each of the plurality of transmission requests in sidelink, or transmit one channel state information for the plurality of transmission requests in sidelink.

3. A terminal comprising:
a reception unit configured to receive a transmission request of channel state information from another terminal in an unlicensed band;
a control unit configured to preferentially select a temporally front-side resource among a plurality of candidate resources existing in a time range in an unlicensed band; and
a transmission unit configured to transmit channel state information for the transmission request in sidelink using the selected resource.

4. The terminal as claimed in claim 3, wherein the time range is a first time range given by first configuration information, and the control unit selects the resource within a second time range, given by second configuration information, that is in a temporally front-side of the first time range.

5. The terminal as claimed in claim 3 or 4, wherein the terminal transmits channel state information of the transmission request a plurality of times.

6. The terminal as claimed in any one of claims 1 to 5, wherein the channel state information includes information related to LBT, or information related to interference.
